# NEUE EUROPÄISCHE PATENTSCHRIFT

(11) **EP 0 579 949 B2**
(45) Veröffentlichungstag und Bekanntmachung des Hinweises auf die Entscheidung über den Einspruch: **18.12.2002**
(45) Hinweis auf die Patenterteilung: 24.04.1996
(21) Anmeldenummer: 93109452.8
(22) Anmeldetag: 14.06.1993
(51) Int. Cl.: B24B 23/02, B24B 23/04

(54) **Flächenschleifmaschine**
Face grinding machine
Machine à rectifier les surfaces

(30) Priorität: 14.07.1992 DE 4223107
(43) Veröffentlichungstag der Anmeldung: 26.01.1994
(73) Patentinhaber: ROBERT BOSCH GMBH, 70442 Stuttgart (DE)
(72) Erfinder: Berner, Gerd, Dipl.-Ing. (FH), D-7000 Stuttgart 70 (DE)

(56) Entgegenhaltungen:
- EP-A- 0 424 720
- EP-B- 0 244 465
- DE-A- 2 938 704
- DE-A- 3 805 926
- DE-C- 107 016
- DE-C- 316 610
- DE-C- 622 243
- GB-A- 870 683
- US-A- 2 350 098
- US-A- 4 782 632
- US-A- 5 020 281
- Katalog 287 "Biegsame Wellen (Druckdatum Mai 1987)
- Fachbuch Roloff/Matek "Maschinenbelemente" 11.Auflage S. 345
- Fachbuch Roloff/Matek "Maschinenelemente "Anhang A11-4 S.90
- Lexikon "Maschinenbau-Grundlagen" Bd.3 S. 649
- DIN 75532 Juni 1976

## Beschreibung

Die Erfindung geht aus von einer Flächenschleifmaschine nach der Gattung des Anspruchs 1.

Durch die DE-OS 38 05 926 ist eine gattungsgemäße Flächenschleifmaschine mit einem Schwingantrieb bekannt, die auf dem Konstruktionsprinzip eines Winkelschleifers beruht. Deren Winkeltrieb besteht aus einem großen, mehrfach gelagerten Kegelradpaar, das die Drehbewegung eines Motors quer zu dessen Achse umlenkt. Dabei entwickelt sie für Winkelschleifer typische Geräusche und vibriert deutlich, wenn nicht ein hoher Bearbeitungsaufwand für die Winkeltriebteile betrieben wurde. Die Herstellungskosten der Flächenschleifmaschine sind auch bei Verwendung von mit geringem Bearbeitungsaufwand hergestellten Winkeltriebteilen hoch, die Handlichkeit ist eingeschränkt und der Benutzer insbesondere wegen des hohen Gewichts und der Abmessungen der Maschine belastet.

Es ist außerdem aus US-PS 5,020,281 ein pneumatisches Handwerkzeug mit schwenkbarem Werkzeugträger-Kopf bekannt, dessen rotierendes Werkzeug über eine biegsame Welle angetrieben wird. Das Werkzeug ist gemeinsam mit dem Werkzeugträger-Kopf nur um einen verhältnismäßig kleinen Winkel schwenkbar am Gehäuse befestigt.

Dabei wird die biegsame Welle nur gering gebogen und von relativ kleinen zu übertragenden Kräften beansprucht. Diese Ausführung sieht nicht vor, einen 90° Winkel zwischen Motorachse und Werkzeugachse einzustellen und kann demzufolge bei bestimmten Arbeiten nicht mit den gleichen Vorteilen verwendet werden, wie sie mit Winkelschleifern erzielbar sind, z.B. bei Flächenbearbeitungen.

### Vorteile der Erfindung

Die erfindungsgemäße Flächenschleifmaschine mit den kennzeichnenden Merkmalen des Anspruchs 1 hat gegenüber den bekannten Flächenschleifern mit Winkelgetriebe den Vorteil stark vereinfachter, robuster Konstruktion, geringen Gewichts, geringer Geräuschentwicklung und guter Handlichkeit. Es hat sich gezeigt, daß trotzdem eine lange Lebensdauer erreicht wird.

Weitere, vorteilhafte Ausgestaltungen der Erfindung ergeben sich aus den auf den Anspruch 1 folgenden Ansprüchen.

### Zeichnung

Ausführungsbeispiele der Erfindung sind in der nachfolgenden Beschreibung anhand der zugehörigen Zeichnung näher ertäutert.

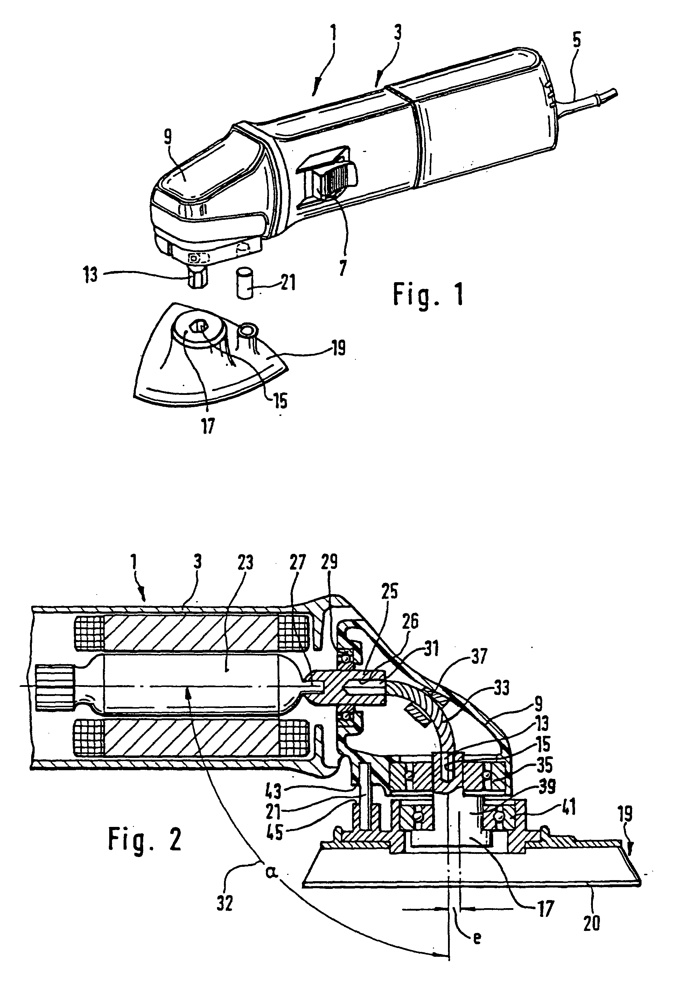

Es zeigen Figur 1 die perspektivische Darstellung einer erfindungsgemäßen Flächenschleifmaschine und Figur 2 eine teilweise geschnittene Darstellung des Ausführungsbeispiels gemäß Figur 1.

### Beschreibung des Ausführungsbeispiels

Die in Figur 1 dargestellte Flächenschleifmaschine ist ein Vibrationsschleifer 1 mit einem Motorgehäuse 3, an dem ein elektrisches Anschlußkabel 5 und ein Einund Ausschalter 7 angeordnet sind. Am Motorgehäuse 3 ist ein aus Kunststoff bestehendes Getriebegehäuse 9 angeordnet. Darin ist ein aus einer Abtriebswelle 33 bestehender Winkeltrieb (Fig. 2) angeordnet. Das Ende der Abtriebswelle 33 bildet einen Mehrkantzapfen 13, der in eine Mehrkantbohrung 15 eines Exzenterträgers 17 gesteckt wird. Der Exzenterträger 17 ist über ein hier nicht dargestelltes Wälzlager an einem Schleifteller 19 drehbar gelagert. Der Schleifteller 19 wird mittels mindestens einem als federnde Gummisäule ausgestalteten, elastischen Stützmittel 21 am Getriebegehäuse 9 festgehalten.

Die in Figur 2 gezeigte vergrößerte Schnittdarstellung gemäß Figur 1 zeigt den Vibrationsschleifer 1 mit den Einzelteilen, Motorgehäuse 3, Getriebegehäuse 9, Mehrkantzapfen 13, Mehrkantbohrung 15 eines Exzenterträgers 17, Schleifteller 19 mit Schleifblatt 20, Stützmittel 21 und der Exzentrizität e, mit der der Schleifteller 19 um die Achse des Mehrkant-Zapfens 13 schwingt.

Darüberhinaus ist ein Motor 23 gezeigt, der einen dem Schleifteller 19 zugewandten, ein Zwischenstück25 mit Mehrkantbohrung 26 tragenden Ankerwellenzapfen 27 aufweist. Das Zwischenstück 25 ragt in das Getriebegehäuse 9 und ist dort in einem Wälzlager 29 drehbar geführt. Das Zwischenstück 25 ist einenends drehfest am Ankerwellenzapfen 27 angeordnet, andernends drehfest mit einem mehrkantigen Endstück 31 einer biegsamen Welle 33 gekuppelt.

Die um einen Winkel 32 von etwa 90 ° gebogenene biegsame Welle 33 ist mit ihrem zweiten Endstück, dem Mehrkantzapfen 13, in die Mehrkantbohrung 15 des Exzenterträgers 17 gesteckt. Dieser ist an der Einsteckstelle über ein weiteres Wälzlager 35 im unteren Bereich des Getriebegehäuses 9 drehbar gelagert. Ein mittiger Bereich der biegsamen Welle 33 ist gegen Schwingung gesichert mit verhältnismäßig großem Spiel in einer kurzen, rohrartigen Abstützstelle 37 geführt.

Der untere Bereich des Exzenterträgers 17 bildet einen exzentrischen Zapfen 39, der über ein drittes Wälzlager 41 gegenüber dem Schleifteller 19 drehbar an diesem axial unverschieblich festgehalten gelagert ist. Der Exzenterträger 17 weist eine ungleichmäßige Massenverteilung auf, die als Unwuchtausgleich für die Bewegung des Schleiftellers 19 dient.

Das als Gummisäule ausgestaltete, elastische Stützmittel 21 ist in je einem Widerlager 43, 45 am Getriebegehäuse 9 und am Schleifteller 19 außerhalb von dessen Mitte angeordnet und hält den Schleifteller 19 um einen geringen Winkel drehbar am Getriebegehäuse 9 fest.

Wird der Motor 23 durch Betätigen des Ein- und Ausschalters 7 inganggesetzt, dreht sich der Ankerwellenzapfen 27 gemeinsam mit dem Zwischenstück 25, der biegesamen Welle 33, dem Exzenterträger 17 sowie dem exzentrischen Zapfen 39. Durch die Drehung des exzentrischen Zapfens 39 wird über das Lager 41 der Schleifteller 19 zu einer durch das Stützmittel 21 gefesselten, schwingenden Kreisbewegung bzw. zu einer elliptischen Bewegungsbahn des Schleiftellers 19 bzw. dessen Kanten angeregt.

Diese Bewegung führt durch eine, auf die Drehzahl des Motors 23 abgestimmte Anordnung bei bestimmten Abmessungen und Werkstoffwahl des Stützmittels 21 zu einer effektiven, gut kontrollierbaren Bewegung an der Schleifblattanordnung bzw. an der Arbeitsfläche des Schleiftellers 19, die sich besonders gut für das Flächenschleifen entlang von Kanten bzw. Hohlkehlen eignet.

Das aus Kunststoff bestehende Getriebegehäuse 9 dämpft besonders wirksam die ohnehin geringen Geräusche und Vibrationen zwischen der biegsamen Welle 33 und deren Ankoppelstellen am Zwischenstück 25 und dem Exzenterträger 17.

Dadurch, daß das Stützmittel 21 austauschbar ist, sind Verschleißreparaturen einfach zu bewerkstelligen. Außerdem können durch geänderte Maße oder eine andere Materialzusammensetzung der neu einzusetzenden Stützmittel 21 bzw. Gummisäule die Schwingcharakteristik des Schleiftellers 19 nach Bedarf geändert werden, so daß dem Werkzeug eine mehr oder weniger gedämpfte Eigendrehung erteilt wird.

Bei einem nicht dargestellten Ausführungsbeispiel der Erfindung sitzen die Enden der biegsamen Welle in rohrartigen Stücken, insbesondere verpreßt, gelötet oder geklebt, wobei das freie Ende mindestens eines der rohrartigen Stücken über Quetschverbindung, Mehrkant oder Gewinde mit dem Schleifteller und/oder dem Ankerwellenzapfen gekoppelt sind. Der Schleifteller hat den Grundriß eines Bogendreiecks, das Stützmittel ist als Quader oder Platte geformt. Außerdem ist der Schleifteller gegenüber dem elastischen Stützmittel in um seine Achse unterschiedlichen Verdrehpositionen festlegbar. Die biegsame Welle kann als gedrillte Metall-Litze, als Feder oder dergl. ausgestaltet sein.

## Patentansprüche

1. Flächenschleifmaschine (1) mit Schwingantrieb, ausgebildet als Exzenterschleifer oder dergl., mit an einem Getriebegehäuse (9) beweglich festgehaltenem Schleifteller (19), der durch Motordrehung, vorzugsweise eines Elektromotors (23) schwingend, insbesondere oszillierend, antreibbar ist, wobei ein Winkelgetriebe zur Übertragung der Motordrehung auf einen Exzenterträger (17) und von diesem zum Schleifteller (19) hin vorgesehen ist,
**dadurch gekennzeichnet, daß** eine biegsame Welle (33) als Winkelgetriebe dient, daß die biegsame Welle (33) über das Winkelgetriebegehäuse (9) einen unveränderbaren Winkel (32) von 90° bis 130° zwischen der Achse des Motors (23) und der Achse des Schleiftellers (19) überbrückt, wobei die biegsame Welle (33) an dem Exzenterträger (17) angreift, der mit nur einer einzigen Lagerstelle im Getriebegehaüse (9) und nur im unteren Bereich des Getriebegehäuses (9) drehbar gelagert ist.

2. Flächenschleifmaschine nach Anspruch 1, **dadurch gekennzeichnet, daß** die biegsame Welle (33) zwischen ihren Enden in einem rohrartig verengten Bereich (37) des Getriebegehäuses (9) geführt wird.

3. Flächenschleifmaschine nach Anspruch 1 oder 2, **dadurch gekennzeichnet, daß** die Enden der biegsamen Welle (33) mehrkantig, insbesondere als Mehrkantzapfen (13, 31), ausgestaltet sind, die über je eine Mehrkantöffnung (15, 26) mit dem Ankerwellenzapfen (27) und dem Schleifteller (19) koppelbar sind.

4. Flächenschleifmaschine nach Anspruch 1, 2 oder 3, **dadurch gekennzeichnet, daß** die Enden der biegsamen Welle (33) in rohrartigen Stücken, insbesondere verpreßt, gelötet oder geklebt, sitzen, wobei das freie Ende mindestens eines der rohrartigen Stücke über Mehrkant- oder Gewinde- oder Quetschverbindung mit dem Schleifteller und/oder dem Ankerwellenzapfen gekoppelt sind.

5. Flächenschleifmaschine nach einem der vorhergehenden Ansprüche, **dadurch gekennzeichnet, daß** der Schleifteller (19) dreieckig, insbesondere in Gestalt eines Bogendreiecks, ausgestaltet ist.

6. Flächenschleifmaschine nach einem der vorhergehenden Ansprüche, **dadurch gekennzeichnet, daß** ein Exzenterzapfen (39) des Exzenterträgers (17) den Schleifteller (19) mitnimmt und ihn in eine kreisende Bewegung versetzt, wobei der Schleifteller (19) durch mindestens ein elastisches Stützmittel (21), vorzugsweise als Quader oder Platte geformt, gegenüber dem Getriebegehäuse (9) festgehalten wird.

7. Flächenschleifmaschine nach Anspruch 6, **dadurch gekennzeichnet, daß** der Schleifteller (19) gegenüber dem elastischen Stützmittel (21) in um seine Achse unterschiedlichen Verdrehpositionen festlegbar ist.

8. Flächenschleifmaschine nach einem der vorhergehenden Ansprüche, **dadurch gekennzeichnet, daß** das Getriebegehäuse (9) aus Kunststoff besteht und insbesondere der Schwingungsdämpfung dient.

9. Flächenschleifmaschine nach einem der vorhergehenden Ansprüche, **dadurch gekennzeichnet, daß** die biegsame Welle (33) als gedrillte Metall-Litze, als Feder oder dergl. ausgestaltet ist.

## Claims

1. Surface-grinding machine (1) having a vibrating drive, designed as an eccentric grinder or the like, with a sanding pad (19) which is secured movably on a transmission casing (9) and which can be driven so as to vibrate, in particular so as to oscillate, by motor rotation, preferably that of an electric motor (23), an angular transmission being provided to transmit the motor rotation to an eccentric carrier (17) and from the latter to the sanding pad (19), **characterized in that** a flexible shaft (33) is used as the angular transmission, **in that** the flexible shaft (33) spans an invariable angle (32) of 90° to 130° via the angular transmission casing (9), between the axis of the motor (23) and the axis of the sanding pad (19), the flexible shaft (33) engaging on the eccentric carrier (17) which is mounted rotatably with only a single bearing point in the transmission casing and only in the lower region of the transmission casing (9).

2. Surface-grinding machine according to Claim 1, **characterized in that** the flexible shaft (33) is guided between its ends in a region (37) of the transmission casing (9) which is constricted in the form of a tube.

3. Surface-grinding machine according to Claim 1 or 2, **characterized in that** the ends of the flexible shaft (33) are of polygonal configuration, particularly as polygonal stubs (13, 31) which can be coupled by way of respective polygonal openings (15, 26) to the armature-shaft stub (27) and the sanding pad (19).

4. Surface-grinding machine according to Claim 1, 2 or 3, **characterized in that** the ends of the flexible shaft (33) are seated, in particular press-fitted, brazed or bonded, in tubular pieces, the free end of at least one of the tubular pieces being coupled to the sanding pad and/or the armature-shaft stub by way of a polygon connection or threaded connection or crimped connection.

5. Surface-grinding machine according to any of the preceding claims, **characterized in that** the sanding pad (19) is of triangular configuration, in particular in the form of an arcuate triangle.

6. Surface-grinding machine according to any of the preceding claims, **characterized in that** an eccentric journal (39) of the eccentric carrier (17) drives the sanding pad (19) and imparts to it an orbiting motion, the sanding pad (19) being secured by at least one elastic supporting means (21), preferably in the form of a cuboid or plate, in relation to the transmission casing (9).

7. Surface-grinding machine according to Claim 6, **characterized in that** the sanding pad (19) can be fixed in different rotational positions about its axis relative to the elastic supporting means (21).

8. Surface-grinding machine according to any of the preceding claims, **characterized in that** the transmission casing (9) is made of plastic and serves, in particular, to damp vibration.

9. Surface-grinding machine according to any of the preceding claims, **characterized in that** the flexible shaft (33) is designed as a twisted metal strand, as a spring or the like.

## Revendications

1. Ponceuse de surface (1) à entraînement vibrant, sous forme de ponceuse excentrique ou analogue comprenant un plateau de ponçage (19) monté de manière mobile sur un boîtier de transmission (9), ce plateau étant entraîné en vibrations, notamment en oscillations, par la rotation d'un moteur, de préférence d'un moteur électrique (23),
une transmission d'angle transmettant le mouvement de rotation du moteur à un support excentré (17) et de là vers le plateau de ponçage (19),
**caractérisée par**
un arbre souple (33) comme transmission d'angle,
l'arbre souple (33) reliant dans le boîtier de transmission d'angle (9) selon un angle invariable (32) compris entre 90° et 130°, entre l'axe du moteur (23) et l'axe du plateau de ponçage (19),
l'arbre souple (23) attaquant le support excentré (17) qui est monté à rotation dans le boîtier de transmission par seulement un point de palier et uniquement dans la partie inférieure du boîtier de transmission (9).

2. Ponceuse de surface selon la revendication 1,
**caractérisée en ce que**
l'arbre souple (33) est guidé entre ses extrémités dans une zone (37) rétrécie, de forme tubulaire, du boîtier de transmission (9).

3. Ponceuse de surface selon l'une quelconque des revendications 1 ou 2,
**caractérisée en ce que**
les extrémités de l'arbre souple (33) sont des embouts à arêtes, notamment à plusieurs arêtes (13, 31) couplées chaque fois par un orifice à plusieurs arêtes (15, 26) au tourillon de l'arbre d'induit (27) et au plateau de ponçage (19).

4. Ponceuse de surface selon l'une quelconque des revendications 1, 2, 3,
**caractérisée en ce que**
les extrémités de l'arbre souple (33) sont montées dans les éléments tubulaires, notamment pressés, soudés ou collés, et l'extrémité libre d'au moins un embout tubulaire est couplée par une liaison à arêtes multiples ou filetages ou écrasement au plateau de ponçage et/ou au tourillon de l'arbre d'induit.

5. Ponceuse de surface selon l'une quelconque des revendications précédentes,
**caractérisée en ce que**
le plateau de ponçage (19) est de forme triangulaire, en particulier d'un triangle à côtés courbes.

6. Ponceuse de surface selon l'une quelconque des revendications précédentes,
**caractérisée en ce qu'**
un tourillon excentré (39) du support excentré (17) entraîne le plateau de ponçage (19) et lui communique un mouvement circulaire, le plateau de ponçage (19) étant relié au boîtier de transmission (9) par au moins un élément d'appui élastique (21), de préférence en forme de cube ou de plaque.

7. Ponceuse de surface selon la revendication 6,
**caractérisée en ce que**
le plateau de ponçage (19) peut être bloqué dans différentes positions de rotation autour de son axe par rapport au moyen d'appui élastique (21).

8. Ponceuse de surface selon l'une quelconque des revendications précédentes,
**caractérisée en ce que**
le boîtier de transmission (9) est en matière plastique et sert notamment d'amortissement aux vibrations.

9. Ponceuse de surface selon l'une quelconque des revendications précédentes,
**caractérisée en ce que**
l'arbre souple (33) est un cordon métallique torsadé en forme de ressort ou analogue.
